# EUROPEAN PATENT SPECIFICATION

(11) **EP 4 369 939 B1**
(45) Date of publication and mention of the grant of the patent: **20.05.2026**
(21) Application number: 22741533.8
(22) Date of filing: 13.07.2022
(51) Int. Cl.: A23G 1/34, A23L 19/00, A23L 27/12, A23L 27/28

(54) **FLAVOR COMPOSITION**
GESCHMACKSZUSAMMENSETZUNG
COMPOSITION D'ARÔME

(30) Priority: 14.07.2021 EP 21185677; 14.07.2021 EP 21185681
(43) Date of publication of application: 22.05.2024
(73) Proprietor: Planet A Foods GmbH, 82152 Planegg (DE)
(72) Inventor: MARQUART, Sara F., 82152 Planegg (DE); MARQUART, Maximilian, 82152 Planegg (DE)
(74) Representative: Schiweck Weinzierl Koch Patentanwälte Partnerschaft mbB
(86) International application number: PCT/EP2022/069631
(87) International publication number: WO 2023/285547

(56) References cited:
- WO-A1-2019/078750
- WO-A2-2021/026089
- WO-A2-2023/288050
- CN-A- 104 187 539
- CN-A- 109 097 194
- CN-A- 110 506 894
- GB-A- 2 031 705
- US-A- 2 887 388
- US-A- 3 102 816
- US-A- 4 312 890
- US-A- 5 676 993
- US-A1- 2006 222 753
- US-A1- 2018 360 067
- US-A1- 2019 000 121
- US-A1- 2020 045 994

## Description

### Technical Field

The present invention relates to a flavor composition, a method for preparing a flavor composition, a food product containing the flavor composition, and the use of the flavor composition. The present invention further relates to a conched confectionery product.

### Technological Background

Cocoa flavor is the basis for ample food products such as confectionery products and beverages. In 2019, 5.5 million tons of cocoa beans have been harvested worldwide. However, the area where cocoa can be harvested is limited. Furthermore, obtaining the final raw product which can be used for example in the manufacturing of chocolate requires multiple processing steps including harvesting, sorting, fermenting, and drying as well as the shipping costs. This makes cocoa a rather expensive raw material.

In addition, cocoa pricing can be highly volatile, and the industry can experience tight supplies as emerging markets are increasing their consumption of chocolate and cocoa-based products.

Furthermore, the cultivation and production of cocoa bring about numerous negative environmental impacts in order to meet the high worldwide demand, such as extensive greenhouse gas emissions, e.g. due to deforestation and land-use change, a high water footprint, the use of large amounts of herbicides and pesticides, as well as its shipment to destinations where it is further processed in food products such as chocolate.

Therefore, there remains a need to both reduce and/or replace the usage of conventional cocoa obtained from the cocoa tree with a cocoa substitute which is based on natural starting products and which has similar characteristics such as flavor profiles and odor, and can be applied in the same way as conventional cocoa.

There also remains a need to provide a confectionery product in which the usage of conventional cocoa obtained from the cocoa tree can be substantially reduced or even avoided, wherein the confectionery product nevertheless has similar characteristics such as flavor profiles and odor as typical confectionery products with chocolate flavor.

It would be even more advantageous if the natural starting products on which the cocoa substitute is based are byproducts of other production processes which usually are of little economic value anymore or find limited further application, such as kernels and pomace in the production of jams and juices.

It would also be even more advantageous if the natural starting products on which the confectionery product is based and which impart the flavor, for example, the chocolate flavor, are byproducts of other production processes which usually are of little economic value anymore or find limited further application, such as kernels and pomace in the production of jams and juices.

CN 104187539 A discloses a method for preparing chocolate essence from cocoa bean husk. US 5,676,993 A discloses a process of producing cacao flavor by roasting combination of amino acids and reducing sugars.

### Summary of the invention

The inventors surprisingly found that the inventive flavor composition meets the above-referenced needs. In particular, the inventors surprisingly found that the inventive flavor composition could be adjusted, mimicking flavor profiles of different cocoa types, e.g. so-called Forastero cocoa (Theobroma cacao IFC-1), and/or the flavor profiles of chocolates, including dairy-like and buttery aroma notes, usually not found in cocoa.

The inventors surprisingly found that a conched confectionery product of the present invention meets the above-referenced needs. In particular, the inventors surprisingly found that the conched confectionery product could be adjusted as required, mimicking flavor profiles of different cocoa types, e.g. so-called Forastero cocoa (Theobroma cacao IFC-1), and/or the flavor profiles of chocolates, including dairy-like and buttery aroma notes, usually not found in cocoa, which flavors are at least in part generated by, and in, a conching step.

Accordingly, one aspect of the invention provides a cocoa or chocolate flavor composition comprising
at least one plant material selected from the group consisting of apricot kernels, plum kernels, peach kernels, cherry kernels, almond, jackfruit seeds, grape seeds, carob, beans, cereals, pseudo-cereals, non-cereal grains, potato, pomace, cassava root, yeast, and combinations thereof, wherein the at least one plant material comprises grape seeds,
wherein the plant material has been heat-treated in the presence of at least one amino acid and/or amino acid derivative, and at least one saccharide,
wherein the amino acid is selected from the group consisting of phenylalanine, glycine, isoleucine, lysine, leucine, proline, serine, threonine, valine, tyrosine, ornithine, and combinations thereof; and/or wherein the at least one amino acid derivative is selected from the group consisting of acetylated phenylalanine, acetylated glycine, acetylated isoleucine, acetylated lysine, acetylated leucine, acetylated proline, acetylated serine, acetylated threonine, acetylated valine, acetylated tyrosine, acetylated ornithine, and combinations thereof,
wherein the at least one saccharide is selected from monosaccharides, disaccharides, and combinations thereof, wherein the monosaccharide is preferably selected from the group consisting of glucose, fructose, xylose, rhamnose, and combinations thereof, and/or the disaccharide is preferably selected from the group consisting of sucrose, maltose, lactose, isomaltulose, isomalt, and combinations thereof, preferably selected from the group consisting of sucrose, maltose, lactose, and combinations thereof,
wherein the flavor composition is at least 95% free of cocoa or cocoa-derived solids.

Another aspect of the invention provides a method for preparing a cocoa or chocolate flavor composition, the method comprising
(a) providing a mixture of
   (i) at least one plant material, and
   (ii) at least one amino acid and/or amino acid derivative, and at least one saccharide, in an aqueous medium,
      wherein the at least one plant material is selected from the group consisting of apricot kernels, plum kernels, peach kernels, cherry kernels, almond, jackfruit seeds, grape seeds, carob, beans, cereals, pseudo-cereals, non-cereal grains, potato, pomace, cassava root, yeast, and combinations thereof, wherein the at least one plant material comprises grape seeds,
      wherein the at least one amino acid is selected from the group consisting of alanine, phenylalanine, glycine, isoleucine, lysine, leucine, proline, serine, threonine, valine, tyrosine, ornithine, and combinations thereof, and/or wherein the at least one amino acid derivative is selected from the group consisting of acetylated alanine, acetylated phenylalanine, acetylated glycine, acetylated isoleucine, acetylated lysine, acetylated leucine, acetylated proline, acetylated serine, acetylated threonine, acetylated valine, acetylated tyrosine, acetylated ornithine, and combinations thereof,
      wherein the at least one saccharide is selected from monosaccharides, disaccharides, and combinations thereof, wherein the monosaccharide is preferably selected from the group consisting of glucose, fructose, xylose, rhamnose, and combinations thereof, and/or the disaccharide is preferably selected from the group consisting of sucrose, maltose, lactose, isomaltulose, isomalt, and combinations thereof, preferably selected from the group consisting of sucrose, maltose, lactose, and combinations thereof;
(b) heating the aqueous mixture of step (a);
(c) drying the heated mixture of step (b);
(d) optionally rinsing the dried mixture obtained in step (c);
(e) subjecting the dried mixture to a heat treatment;
(f) optionally grinding and/or defatting the heat-treated dried mixture of step (e); and
(g) obtaining the flavor composition,
wherein the flavor composition is at least 95% free of cocoa or cocoa-derived solids.

Another aspect of the invention provides a flavor composition obtained by the method according to the present invention.

Another aspect of the invention provides a food product containing the flavor composition according to the present invention.

Another aspect of the invention provides the use of the flavor composition according to the present invention as a cocoa substitute.

Another aspect of the invention provides a conched confectionery product comprising an emulsion of a flavoring composition according to the present invention and an edible fat, wherein the conched confectionery product is at least 95% free of cocoa or cocoa-derived solids.

### Brief description of the Figures

Figure 1: Sensory of apricot kernel and oat-based flavor composition; treated and control.
Figure 2: GC-MS data of apricot kernel and oat-based flavor composition; treated and control.
Figure 3: Sensory of color and aroma of milk chocolate substitute with oat-based flavor composition; treated and control.
Figure 4: GC-MS data of a dairy-free milk-type chocolate substitute with oat-based flavor composition; treated and control.
Figure 5: Sensory of aroma, color and taste of dark chocolate substitute compared to genuine dark chocolate (60% cocoa).

### Detailed description

In the following, the invention will be explained in more detail.

### Definitions

For the present invention to be readily understood, several definitions of terms used in the course of the invention are set forth below.

As used herein, the term "flavor" refers to one or more sensory stimuli, such as, for example, one or more taste (gustatory), smell (olfactory), touch (tactile), and temperature (thermal) stimuli. The terms "flavor" and "aroma" are synonymous and are used interchangeably. The sensory experience of a subject exposed to a flavor may be classified as a characteristic experience for the particular flavor. For example, a flavor can be identified by the subject as being a floral, citrus, berry, nutty, caramel, chocolate, peppery, smoky, cheesy, meaty, etc. flavor. As used herein, a flavor composition can be selected from a liquid, dry powder, spray, paste, suspension, and any combination thereof. The flavor can be a natural composition, an artificial composition, a nature-identical, or any combination thereof.

As used herein, the term "flavor profile" refers to a combination of sensory stimuli, for example, tastes, such as sweet, sour, bitter, salty, kokumi, and/or umami tastes, and/or olfactory, tactile, and/or thermal stimuli. The flavor profile may comprise one or more flavors that contribute to the sensory experience of a subject. Modifying, changing, or varying the combination of stimuli in a flavor profile may change the sensory experience of a subject.

As used herein, the term "food product" refers to an ingestible product, such as human food, animal (pet) foods, and pharmaceutical compositions.

As used herein, the term "flavor composition" refers to at least one, two, three, four, five, or more compounds or biologically acceptable salts thereof that modulate, including enhancing, multiplying, potentiating, decreasing, suppressing, or inducing, the tastes, smells and/or flavors of a natural or synthetic tastant, flavoring agent, taste profile, flavor profile and/or texture profile in an animal or a human. The flavor composition may comprise a combination of compounds or biologically acceptable salts thereof. The flavor composition may further include one or more excipients.

As used herein, the term "plant material" as used herein is meant to comprise the mentioned material as such but also comprises processed products or side-products thereof such as press cakes, pomace, polished grains, and spent grounds, as well as parts of the respective plant material such as shells, grape skins, marc, pods, and pulp. Yeasts and fungi shall be considered as belonging to "plant material" for the purpose of the present invention.

As used herein, the term "cocoa" also comprises cacao. The term "cocoa" refers to processed products derived from the Theobroma cacao fruit, in particular the seeds thereof (cacao beans), such as fermented, roasted, alkalized, ground, and pressed cacao beans. The term "cacao" refers to the unprocessed products derived from the Theobroma cacao fruit, in particular the seeds (cacao beans) thereof.

As used herein, the term "cocoa side products" refers to anything derived from the cocoa tree, including fruits, that are not the cocoa bean, e.g. cocoa pulp, cocoa shells, cocoa tree leaves, and the like.

As used herein, the term "press cake" refers to the residue of the oil production, of oleaginous plant materials (e.g. seeds, or fruits), such as olives, apricot kernels, canola, linseed, sunflower, etc. The residue is derived from pressing or milling the plant materials, to recover the oil for further applications (food, cosmetics, and the like). The residue is rich in protein and/or carbohydrates.

As used herein, the term "chocolate", "chocolates" or "chocolate product" refers to all chocolate or chocolate-like compositions with a fat fraction that can be tempered and that can comprise at least one cocoa or cocoa-like component in this fat fraction.

As used herein, the term "chocolate substitute" refers to all chocolate-like compositions with a fat fraction that can comprise substantially no cocoa component in this fat fraction.

The term "particle size" or "volume-based particle size" or "volume-based particle size distribution" as used herein is equivalent to and also referred to as the Dv50 or D50 and means that at least about 50% of the particles have a diameter of less than the size specified. The aforementioned terms are used interchangeably herein. For example, a volume-based particle size (Dv50) of less than about 1000 nm, means that 50% of the particle population has a diameter of less than about 1000 nm when measured by static or dynamic light scattering techniques known to those skilled in the art. Unless otherwise specified, all particle sizes are specified in terms of volume-based measurements and are measured by laser light scattering/diffraction. The terms "D90" and "D10" mean that respectively at least about 90% and 10% of the particles have a diameter of less than the size specified. These may also be referred to as "Dv90" and "Dv10" respectively, and these terms are used interchangeably herein.

As used herein, the term "chocolate confectionery product" refers to preparations made with chocolate and/or chocolate-substitutes, e.g. bars, snack bars, chips, flakes, fillings, inclusions, coatings, and the like.

As used herein, the term "substantially free of" refers to a mass that is at least 95% free of the named ingredient, e.g. 95% free of cocoa, such as at least 96%, at least 97%, at least 98%, or at least 99% of the respective ingredient.

As used herein, the term "cocoa butter replacers" refers to a fat that is derived from hydrogenated and fractionated vegetable fats. It can be used to impart gloss retention and sharp meltdown to the chocolate confectionery products without tempering. Cocoa butter replacer can be mixed with other fats and cocoa, and/or cocoa powder substitutes to produce chocolate confectionery products.

As used herein, the term "cocoa butter substitutes" refers to a confectionery fat substitute. This product is formulated from hydrogenated and fractionated palm kernel oil. It can be used to give a final chocolate confectionery product a good snappiness, good melting characteristics, and good flavor release without tempering.

As used herein, the term "cocoa butter equivalent" refers to a fat that is specially formulated from palm oil, shea butter, mango kernel fat, sal fat, or illipe butter in order to resemble cocoa butter in both physical and chemical properties. Using this product shows compatibility with cocoa butter and shares similar crystallization and melt profiles. It can be used to provide cost reduction as a cocoa butter substitute at any ratio, imparting strong heat resistance and melting characteristics.

As used herein, the term "steeping" refers to a process of marinating plant material in a liquid (water, lipids, organic solvent), with or without stirring, and with or without heating for 5 minutes and up to 14 days.

As used herein, the term "cooking" refers to a process of heating a mixture to at least 80°C.

As used herein, the term "roasting" refers to a process of heating by means of confection and/or conduction, at elevated temperatures such as from 140°C to 300 °C

As used herein, the term "toasting" refers to a process of heating by means of confection and/or conduction, at elevated temperatures such as from 100°C to 140°C

As used herein, the term "drying" refers to a process of the removal of water from a mixture, that can be carried out via methods such as microwave-assisted drying, freeze-drying, spray drying, freeze concentration, drying under reduced pressure, thin layer drying, convectional heating, conductional heating and the like to remove water.

As used herein, the term "aqueous medium" refers to a liquid, which is composed of more than 50% of water.

As used herein, the term "conching" refers to a process of mechanical mixing, whereby a surface scraping mixer and agitator, known as a "conche" or "melangeur", evenly distributes lipids within chocolate and chocolate substitutes, and may further reduce the particle size of the cocoa- and non-cocoa solids. Conching is typically carried at elevated temperatures such as from 45°C to 80°C, for elongated times, such as 1 hour to 72 hours.

As used herein, the term "comprising" is to be construed as encompassing both "including" and "consisting of", both meanings being specifically intended, and hence individually disclosed, embodiments according to the present invention.

As used herein, the articles "a" and "an" preceding an element or component are intended to be nonrestrictive regarding the number of instances (i.e. occurrences) of the element or component. Therefore, "a" or "an" is to be read to include one or at least one, and the singular word form of the element or component also includes the plural unless the number is obviously meant to be singular.

As used herein, the term "about" modifying the quantity of a substance, ingredient, component, or parameter employed refers to variation in the numerical quantity that can occur, for example, through typical measuring and handling procedures, e.g., liquid handling procedures used for making concentrates or solutions. Furthermore, variation can occur from inadvertent error in measuring procedures, differences in the manufacture, source, or purity of the ingredients employed to carry out the methods, and the like. In one embodiment, the term "about" means within 10% of the reported numerical value. In a more specific embodiment, the term "about" means within 5% of the reported numerical value.

As outlined above, one aspect of the invention provides a cocoa or chocolate flavor composition as defined in the claims, which comprises at least one plant material selected from the group consisting of apricot kernels, plum kernels, peach kernels, cherry kernels, almond, jackfruit seeds, grape seeds, carob, beans, cereals, pseudo-cereals, non-cereal grains, potato, pomace, cassava root, yeast, and combinations thereof, wherein the at least one plant material comprises grape seeds, wherein the at least one plant material has been heat-treated in the presence of at least one amino acid and/or amino acid derivative, at least one saccharide, or a combination thereof as defined in the claims.

### Plant material

In one embodiment, the at least one plant material comprises seeds derived from fruits of the *Amygdaloideae* subfamily, and preferably apricot kernels, plum kernels, peach kernels, cherry kernels, and combinations thereof.

The at least one plant material is selected from the group consisting of apricot kernels, plum kernels, peach kernels, cherry kernels, almond, jackfruit seeds, grape seeds, carob, beans, cereals, pseudo-cereals, non-cereal grains, potato, pomace, cassava root, yeast, and combinations thereof, wherein the at least one plant material comprises grape seeds.

In one embodiment, the at least one plant material is selected from the group consisting of apricot kernels, plum kernels, peach kernels, cherry kernels, jackfruit seeds, grape seeds, carob, and barley malt, oats, beans, and combinations thereof, wherein the at least one plant material comprises grape seeds. Preferred plant materials and combinations thereof include
(i) apricot kernels, oats, grape seeds, and sprouted barley
(ii) apricot kernels, oats, grape seeds, and sprouted barley
(iii) apricot kernels, grape seeds and oats

Exemplary grain, cereals, and pseudo cereals include corn, maize, oat, barley, rye, wheat, millet, sorghum, rice, quinoa, amaranth, buckwheat, and the like.

Exemplary beans include fava beans.

### Amino acid and amino acid derivative

In one embodiment, the amino acid is selected from the group consisting of phenylalanine, glycine, isoleucine, lysine, leucine, proline, serine, threonine, valine, tyrosine, ornithine, and combinations thereof.

Preferably the amino acid is selected from the group consisting of phenylalanine, glycine, isoleucine, lysine, leucine, proline, serine, threonine, valine, and combinations thereof.

Furthermore, amino acid derivatives may be used according to the present invention. Amino acid derivatives include amino acids modified by acetylation.

In one embodiment, the at least one amino acid derivative is selected from the group consisting of acetylated phenylalanine, acetylated glycine, acetylated isoleucine, acetylated lysine, acetylated leucine, acetylated proline, acetylated serine, acetylated threonine, acetylated valine, acetylated tyrosine, acetylated ornithine, and combinations thereof.

In one embodiment, the at least one amino acid derivative is selected from the group consisting of acetylated phenylalanine, acetylated glycine, acetylated isoleucine, acetylated lysine, acetylated leucine, acetylated proline, acetylated serine, acetylated threonine, acetylated valine, acetylated tyrosine, acetylated ornithine, and combinations thereof.

### Saccharides

The at least one saccharide is selected from monosaccharides, disaccharides, and combinations thereof.

In one embodiment, the monosaccharide is selected from the group consisting of glucose, fructose, xylose, rhamnose, and combinations thereof.

In one embodiment, the disaccharide is selected from the group consisting of sucrose, maltose, lactose, and combinations thereof. Preferably, the disaccharide is selected from the group consisting of lactose, sucrose, and combinations thereof.

In one embodiment, the flavor composition comprises heat-treated grape seeds, wherein the grape seeds have been heat-treated in the presence of glucose, glycine, leucine, phenylalanine, and proline.

In one embodiment, the flavor composition comprises heat-treated grape seeds, apricot kernels, barley malt, and oats, that have been heat-treated in the presence of glucose, glycine, leucine, isoleucine and phenylalanine;

In one embodiment, the flavor composition comprises heat-treated oats, heat-treated grape seeds, and heat-treated apricot kernels, wherein the oats, grape seeds, and apricot kernels have been heat-treated in the presence of glucose, glycine, leucine, isoleucine, proline and phenylalanine.

The flavor composition is a cocoa flavor composition or chocolate flavor composition.

The flavor composition is at least 95% free of cocoa or cocoa-derived solids.

### Heat-treatment of the plant material

According to the present invention, the at least one plant material comprised in the flavor composition is a heat-treated plant material.

In one embodiment, the at least one plant material has been heat-treated by steeping, cooking, thermally drying, microwave irradiation, roasting, toasting, or a combination thereof.

In one embodiment, the at least one plant material has been heat-treated at a temperature from 100°C to 200°C for 2 min to 60 min. Preferably, the at least one plant material has been heat-treated at a temperature from 110°C to 180°C for 2 min to 45 min. More preferably, the at least one plant material has been heat-treated at a temperature from 120°C to 160°C for 5 min to 45 min.

The flavor composition according to the invention may be provided in granulated or pulverized form. In one embodiment, the particle size D50 of the flavor composition is 10 mm or less, such as 5 mm or less, 3 mm or less, 1 mm or less, 700 µm or less, 500 µm or less, 400 µm or less, 300 µm or less, 200 µm or less, 100 µm or less, 90 µm or less, 80 µm or less, 70 µm or less, 60 µm or less, 50 µm or less, 40 µm or less, 30 µm or less, 20 µm or less, 10 µm or less. In one embodiment, the particle size D50 of the flavor composition is in a range of from 10 µm to 800 µm, such as in a range of from 50 µm to 500 µm.

### Method for preparing a flavor composition

As outlined above, another aspect of the invention provides a method for preparing a cocoa or chocolate flavor composition according to the present invention, the method comprising
(a) providing a mixture of
   (i) at least one plant material, and
   (ii) at least one amino acid and/or amino acid derivative, and at least one saccharide,
      in an aqueous medium,
      wherein the at least one plant material is selected from the group consisting of apricot kernels, plum kernels, peach kernels, cherry kernels, almond, jackfruit seeds, grape seeds, carob, beans, cereals, pseudo-cereals, non-cereal grains, potato, pomace, cassava root, yeast, and combinations thereof, wherein the at least one plant material comprises grape seeds,
      wherein the at least one amino acid is selected from the group consisting of alanine, phenylalanine, glycine, isoleucine, lysine, leucine, proline, serine, threonine, valine, tyrosine, ornithine, and combinations thereof, and/or wherein the at least one amino acid derivative is selected from the group consisting of acetylated alanine, acetylated phenylalanine, acetylated glycine, acetylated isoleucine, acetylated lysine, acetylated leucine, acetylated proline, acetylated serine, acetylated threonine, acetylated valine, acetylated tyrosine, acetylated ornithine, and combinations thereof,
      wherein the at least one saccharide is selected from monosaccharides, disaccharides, and combinations thereof, wherein the monosaccharide is preferably selected from the group consisting of glucose, fructose, xylose, rhamnose, and combinations thereof, and/or the disaccharide is preferably selected from the group consisting of sucrose, maltose, lactose, isomaltulose, isomalt, and combinations thereof, preferably selected from the group consisting of sucrose, maltose, lactose, and combinations thereof;
(b) heating the aqueous mixture of step (a);
(c) drying the heated mixture of step (b);
(d) optionally rinsing the dried mixture obtained in step (c);
(e) subjecting the dried mixture to a heat treatment;
(f) optionally grinding and/or defatting the heat-treated dried mixture of step (e); and
(g) obtaining the flavor composition,
wherein the flavor composition is at least 95% free of cocoa or cocoa-derived solids.

In one embodiment, the plant material may be pre-treated before providing the mixture of step (a) of the method according to the present invention. Such a pre-treatment may comprise the removal of cyanide in the plant material such as apricot, peach, plum or cherry kernels.

In one embodiment, the heating in step (b) comprising heating the aqueous mixture to a temperature of from 60°C to 100°C, preferably a temperature of from 80°C to 95°C, for at least 5 min, preferably for at least 10 min such as from 10 min to 180 min.

In one embodiment, the heat treatment in step (e) comprises roasting the dried mixture at a temperature of from 120°C to 220°C, preferably at a temperature of from 130°C to 210°C, for at least 2 min, preferably for at least 4 min such as from 4 min to 60 min.

In one embodiment, the method further comprises adjusting the pH of the mixture of step (a) to a range of from 6.5 to 9.5. Preferably, the pH is adjusted to a range of from 8.0 to 9.0.

Suitable compounds for adjusting the pH include acids and their corresponding salts (e.g. phosphoric acid, lactic acid, acetic acid). Adjusting the pH may include heating the aqueous mixture to a temperature of from 60°C to 100°C, preferably to a temperature of from 80°C to 95°C.

In one embodiment, the amount of the at least one amino acid and/or derivatives thereof in the mixture provided in step (a) is of from 0 wt.-% to 5 wt.-%, preferably of from 0.2 wt.-% to 2.5 wt.-%, based on the total weight of the at least one plant material.

In one embodiment, the amount of the at least one saccharide in the mixture provided in step (a) is of from 0 wt.-% to 10 wt.-%, preferably of from 1 wt.-% to 7.5 wt.-%, more preferably of from 1 wt.-% to 5 wt.-%, based on the total weight of the at least one plant material.

Another aspect of the invention provides a flavor composition obtained by the method according to the present invention.

The flavor composition according to the present invention may be used in food products. Therefore, another aspect of the invention provides a food product containing the flavor composition according to the present invention.

In one embodiment, the food product is selected from the group consisting of confectionery products, sweet baked products, ice creams, dairy- and non-dairy products, beverages, and snack products.

Due to the resemblance in the flavor profile with that of cocoa, the flavor composition according to the present invention can be used as a cocoa substitute.

Another aspect of the invention provides a conched confectionery product comprising an emulsion of a flavor composition according to the present invention and an edible fat, wherein the conched confectionery product is substantially free of cocoa or cocoa-derived solids.

In one embodiment, the conched confectionery product comprises from 0.5 wt.-% to 20 wt.-% flavor composition based on the total weight of the conched confectionery product. Preferably, the conched confectionery product comprises of from 2 wt.-% to 20 wt.-% flavor composition based on the total weight of the conched confectionery product, such as from 4 wt.-% to 19 wt.-%.

### Plant material

All exemplary plant materials, embodiments, and preferred embodiments relating thereto and included herein, specifically as described in the context of the flavor composition, apply to all aspects of the inventive conched confectionery product .

### Amino acid and amino acid derivative

All exemplary amino acids and amino acid derivatives, embodiments, and preferred embodiments relating thereto and included herein, specifically as described in the context of the flavor composition, likewise apply to all aspects of the inventive conched confectionery product.

### Saccharide

All exemplary saccharides, embodiments, and preferred embodiments relating thereto and included herein, specifically as described in the context of the flavor composition, likewise apply to all aspects of the inventive conched confectionery product.

The flavor composition may be heat-treated in the presence of at least one amino acid and/or amino acid derivative, at least one saccharide, or a combination thereof in a conching step.

In one embodiment, the conched confectionery product is a chocolate confectionery product.

In one embodiment, the conched confectionery product comprises of from 0.5 wt.-% to 20 wt.-% flavor composition of the invention based on the total weight of the conched confectionery product, such as 0.5, 1, 2, 3, 4, 5, 6, 7, 8, 9, 10, 11, 12, 13, 14, 15, 16, 17, 18, 19, or 20 wt.-%. In one embodiment, the conched confectionery product comprises of from 2 wt.-% to 20 wt.-% flavor composition of the invention based on the total weight of the conched confectionery product. Preferably, the conched confectionery product comprises of from 4 wt.-% to 19 wt.-% flavor composition of the invention based on the total weight of the conched confectionery product.

In one embodiment, the conched confectionery product comprises (in wt.-% based on the total weight of the conched confectionery product):
(i) 0.5-20 wt.-% flavor composition according to the present invention,
(ii) 0-55 wt.-% sugar (e.g. sucrose, lactose),
(iii) 10-50 wt.-% cocoa butter equivalent (commercially available, based on palm fat, and/or shea butter)
(iv) 10-30 wt.-% milk powder (whole milk and/or skimmed milk powder), oat milk powder, oat flour, fava bean powder, fava bean protein, pea milk powder, pea protein
(v) 0-10 wt.-% butter fat
(vi) 0-1 wt.-% vanillin, and
(vii) 0-1 wt.-% lecithin (e.g. soy lecithin, sunflower lecithin).

In one embodiment, the at least one substrate carrier material has a particle size (D50) of 40 µm or less, preferably 30 µm or less, and more preferably 20 µm or less.

Due to the resemblance in the flavor profile with that of cocoa, the conched confectionery product according to the present invention can be used as a substitute for chocolate or chocolate flavor confectionery products.

Accordingly, in one embodiment, the conched confectionery product is a chocolate confectionery product. In one embodiment, the conched confectionery product has similar organoleptic properties as chocolate.

The conched confectionery product is at least 95% free of cocoa or cocoa-derived solids.

It is to be understood that all embodiments including preferred embodiments recited for a particular aspect of the present invention (e.g. the flavor composition) likewise apply to all other aspects of the present invention, such as methods and uses according to the present invention.

### Examples

The following examples illustrate the present invention.

### Reference Example 1: Flavor composition based on apricot kernels, oats

### Pre-treatment:

Apricot kernels were pre-treated to remove residual cyanide. 500 g of apricot kernels were placed in a container, and 5 L of water was added. The apricot kernels were soaked for 24 hours, the water was drained and another 5 L was added (replenished), with the kernels being soaked for an additional 24 hours. The water was drained again, and the kernels were dried at 90°C for 12 hours.

### Preparation of flavor composition:

100 g of the pre-treated apricot kernels were placed in a beaker, and 100 mL water, 5 g glucose, 0.75 g leucine, 0.75 g isoleucine, 0.5 g phenylalanine, and 1 g glycine were added. For incubation, the mixture was heated to 90°C on a hot plate while stirring and kept at that temperature for 15 min. The mixture was then placed in an electric oven at 90°C for 12 hours to dry. The apricot kernels were roasted in a drum roaster for 6.5 min at 170°C. The flavor was intensely cocoa- and chocolate-like, with subtle notes of sweet and roasted aroma.

100 g of untreated, hulless oat (*Avena nuda*) grains were placed in a beaker, and 100 mL water, 5 g glucose, 0.75 g leucine, 0.75 g isoleucine, 0.5 g phenylalanine, and 1 g glycine were added. For incubation, the mixture was heated to 90°C on a hot plate while stirring and kept at that temperature for 15 min. The mixture was then placed in an electric oven at 90°C for 12 hours to dry. After the same drying, the mixture was roasted in a drum roaster for 6.5 min at 170°C. The grains' flavor was intensely cocoa- and chocolate-like, with subtle notes of cereal and roasted aroma. After roasting and grinding, the roasted apricot kernels and hulless oats were mixed 70/30 (w/w) and ground using a ball mill to a particle size D50 of about 600 µm. The obtained flavor composition can then be applied as a cocoa powder substitute.

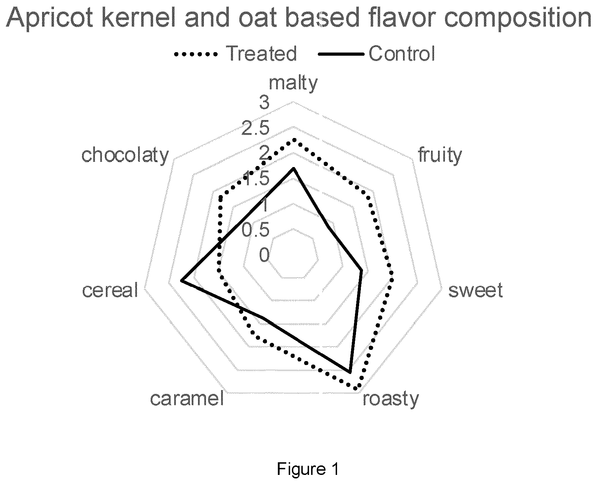

Figure 1 depicts the results of the sensory evaluation (n=8) of the aroma of the flavor composition compared to a flavor composition that was prepared equally, but incubated with water only (control). The panelists were asked to rate the given aroma descriptors from 0 (no aroma) to 5 (strong aroma). Besides the cereal-like aroma, which was decreased, all other descriptors were perceived as stronger for the incubated sample. In Particular, the chocolaty flavor was increased from 1.2 to 1.8.

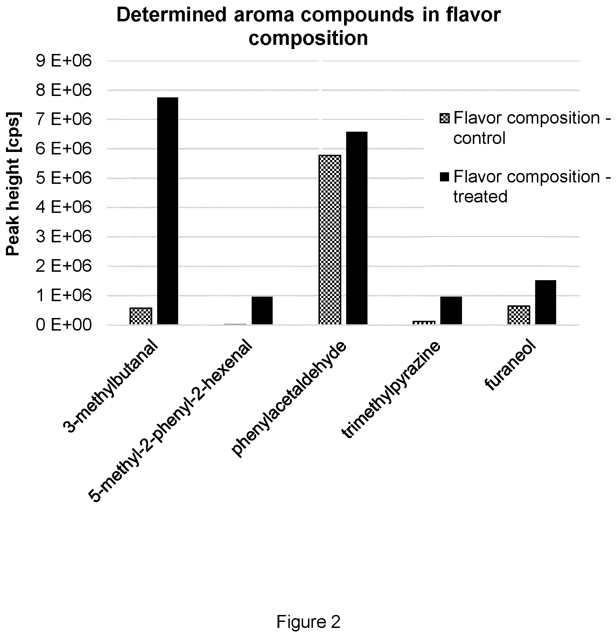

The results of the sensory experiments are backed up by gas chromatography-mass spectrometry (GC-MS) data as shown in Figure 2. Figure 2 shows that certain aroma compounds were increased compared to the control. 5-methyl-2-phenyl-2-hexenal, also called cocoa hexenal, which has a cocoa-like smelling aroma was detected only in the treated flavor composition. 3-methylbutanal, which has a malty odor was increased about 15-fold, as well as the roasted smelling trimethyl pyrazine.

### Reference Example 2: Flavor composition based on apricot kernels, oats, grape seeds, and barley

20 g hulless oats (*Avena nuda*) and 40 g apricot kernels were placed in a beaker, and 100 mL water, 5 g glucose, 1.5 g leucine, 0.5 g phenylalanine, and 1 g glycine were added. For incubation, the mixture was heated to 90°C on a hot plate while stirring and kept at that temperature for 15 min. The mixture was then placed in an electric oven at 90°C for 12 hours to dry. The treated apricot kernels and oats were roasted in a drum roaster for 6.5 min at 170°C. 40 g of roasted apricot kernels, 20 g of roasted hulless oats as well as 20 g of untreated, dried grape seeds were mixed.

Additionally, 20 g of sprouted and dried barley grains were roasted in a drum roaster for 6.5 min at 170°C and added to the mixture. The resulting mixture was ground using a ball mill to a particle size D50 of about 600 µm to obtain the flavor composition which can be applied as a cocoa powder substitute. The flavor was distinct cocoa and chocolate-like, with roasty and fruity notes and a resemblance to dark chocolate.

### Reference Example 3: Flavor composition based on buckwheat

100 g buckwheat was placed in a beaker, and 100 mL water, 5 g glucose, 1 g glycine, 1.5 g leucine, and 0.5 g phenylalanine were added. The mixture was heated to 90°C on a hot plate while stirring and kept at that temperature for 15 min. The mixture was placed in an electric oven at 90°C for 12 hours. After the water had evaporated, the treated buckwheat was roasted in a drum roaster for 6.5 min at 170°C. The roasted buckwheat grains were ground using a ball mill to a particle size D50 of about 600 µm to obtain the flavor composition which can be applied as a cocoa powder substitute. The flavor was distinct cocoa and chocolate-like, with a resemblance to dairy chocolate.

### Reference Example 4: Flavor composition based on fava bean

100 g fava bean (*Vicia faba*) were placed in a beaker, and 100 mL water, 5 g glucose, 1 g glycine, 0.5 g leucine, 0.5 g isoleucine, and 0.5 g phenylalanine were added. The mixture was heated to 90°C on a hot plate while stirring and kept at that temperature for 15 min. The mixture was placed in an electric oven at 90°C for 12 hours. After the water was evaporated, the treated fava beans were roasted in a drum roaster for 6.5 min at 170°C. The roasted fava beans were ground using a ball mill to a particle size D50 of about 600 µm to obtain the flavor composition which can be applied as a cocoa powder substitute. The flavor was distinct cocoa and chocolate-like, with a resemblance to dairy chocolate.

### Example 5: Flavor composition based on acidified apricot kernels, barley, grape seeds, and oats

55 g apricot kernels, 40 g oats, and 2.5 g sprouted and roasted (drum roaster for 6.5 min at 170°C) barley as well as 2.5 g grape seeds were placed in a beaker, and 200 mL water, 5 g glucose, 1 g glycine, 0.75 g leucine, 0.75 g isoleucine and 1.0 g phenylalanine were added. The mixture was then heated to 90°C on a hot plate while stirring and kept at that temperature for 15 min before removing the heat source. Following that, the mixture was placed in an electric oven at 90°C for 16 hours. After the water was evaporated, the dried mixture was roasted in a drum roaster for 12 min at 145°C. The roasted mixture was then finely ground using a ball mill to a particle size D50 of about 600 µm to obtain the flavor composition which can be applied as a cocoa powder substitute. The flavor was distinctly chocolate-like, with fruity and earthy notes, with a dark brown color, resembling dutched cocoa.

### Reference Example 6: Flavor composition based on carob, sprouted barley, and oats

55 g carob seeds, 40 g oats, and 5g sprouted barley were placed in a beaker, and 200 mL water, 5.0 g glucose, 1.0g glycine, 0.75 g leucine, 0.75 g isoleucine, 1.0g lysine, and 1.0 g phenylalanine were added. The mixture was heated to 90°C on a hot plate while stirring and kept at that temperature for 15 min before removing the heat source. The mixture then was placed in an electric oven at 90°C for 16 hours. After the water was evaporated, the dried mixture was roasted in a drum roaster for 7 min at 150°C. The roasted mixture was then finely ground using a ball mill to a particle size D50 of about 600 µm to obtain the flavor composition which can be applied as a cocoa powder substitute. The flavor was distinctly chocolate-like, with a slightly sweet and bitter taste, fruity and earthy notes, with a dark brown color, resembling dutched cocoa.

### Example 7: Flavor composition based on apricot kernels, grape seeds, and oats

100 g apricot kernels, 42 g oats, and 3 g grape seeds were placed in a beaker, and 200 mL water, 5 g glucose, 1 g glycine, 0.75 g leucine, 0.75 g isoleucine, 1.05 g phenylalanine, and 0.5 g proline were added. The mixture was heated to 90°C on a hot plate while stirring and kept at that temperature for 15 min before removing the heat source. The mixture then was placed in an electric oven at 90°C for 16 hours. After the water was evaporated, the oat grains, grape seeds, and apricot kernels were roasted together in a drum roaster for 12 min at 145°C. The roasted grains, seeds, and kernels were then finely ground using a ball mill to a particle size D50 of about 600 µm to obtain the flavor composition which can be applied as a cocoa powder substitute. The flavor was distinctly chocolate-like, with fruity and earthy notes, resembling cocoa.

### Reference Example 8: Preparation of milk-chocolate substitute:

Formulation: 120 g of the flavor composition of Example 1, 339 g of cocoa butter equivalent (commercially available, based on palm fat, and shea butter), 319 g of sugar, 209 g of oat flour, and 9 g of dried Aronia powder were mixed to produce 1 kg of milk-chocolate substitute mass.

Milling: The mass was milled (3-roll roller grinder) to produce fine particles (D90, laser diffraction) of <30 µm.

Conching: The finely milled mass was then transferred into a conching device (Elkolino Conche, Buhler, Switzerland). The conching device was set to 60°C and 1000 rpm for 2 hours. In the first hour, the conche was left open to remove residual light volatile acids, before the conching device was closed for the remaining 1 hour. At the end of the 2 hours, 20 minutes before stopping the conching, the lid was removed again and 4 g soy lecithin was added. The chocolate substitute was removed from the conche, tempered, and used like conventional chocolate, by molding the chocolate substitute into bars. The chocolate had a brownish color, similar to conventional dairy chocolate, and an intense chocolate-like, dairy, and creamy aroma. After cooling down and hardening, the bars had a shiny, firm surface, comparable to conventional dairy chocolate.

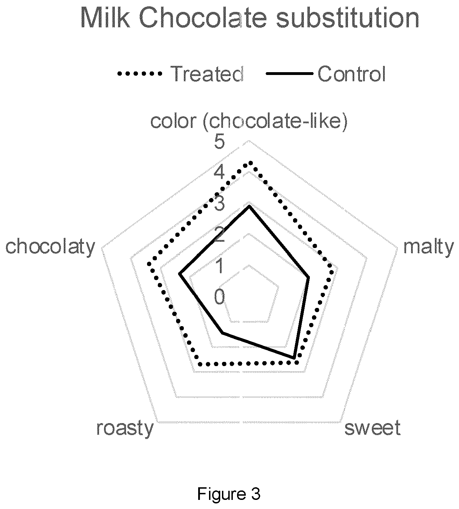

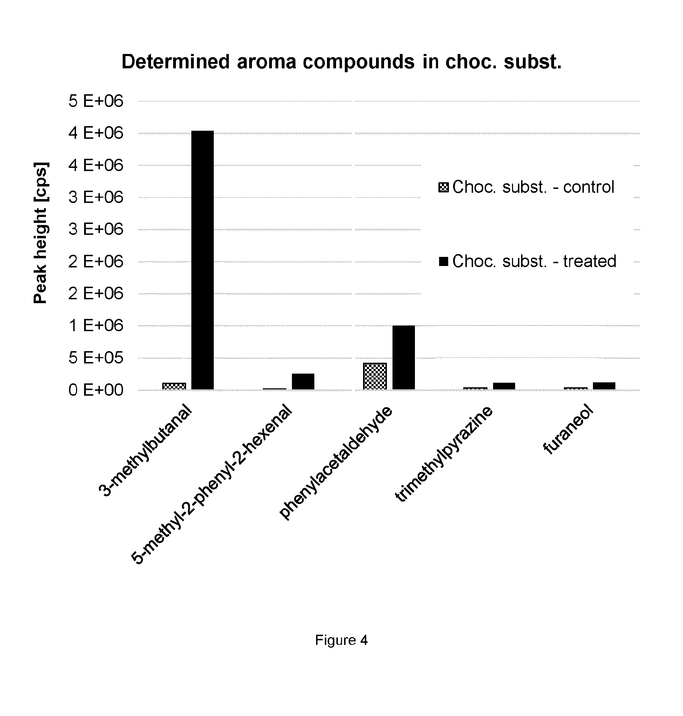

The properties of the final product were analyzed by sensory (n=8, Figure 3). The sample was compared to a control sample that was produced using a flavor composition incubated in water without glucose or amino acids but was otherwise treated equally (Example 1, control). The comparison demonstrates that by adding glucose and amino acids as precursors, the flavor properties are positively influenced. Figure 3 displays that the chocolaty, roasted, and malty flavor was increased. Also, the chocolate-like color was improved. The colors of treated and control samples were also measured by a colorimeter to give values according to CIELab. The Color measurement for the treated milk chocolate substitute gave the values L=35.86, a=9.49, b=10.23 and for the control L=45.00, a=9.6, b=7.16. The lower L and higher b values signal a darker and browner color for the treated sample. Also, the determination of aroma compounds by GC-MS (Figure 4) proved an increase in important volatiles in the treated samples. The cocoa-like smelling 5-methyl-2-phenyl-2-hexenal (10-fold increase), the malty-smelling 3-methylbutanal (40-fold), the sweet-smelling Phenylacetaldehyde (two-fold), and the two roasted smelling compounds trimethyl pyrazine (three-fold) and furaneol (three-fold) were increased in the treated sample.

### Reference Example 9: Dark chocolate substitute:

Formulation: For 1 kg of dark-chocolate substitute, 160 g of the flavor composition (example 2), 340 g of cocoa butter equivalent (commercially available, derived from AAK based on palm fat, and shea butter), 256 g of sugar, 10 g of malt extract as a colorant and 200 g of oat drink powder were mixed. Milling: The mass was milled (3-roll roller grinder) to produce fine particles (D90, laser diffraction) of <30 µm.

Conching: The finely milled mass was then transferred into a conching device (Elkolino Conche, Buhler, Switzerland). The conche was set to 60°C and 1000 rpm for 2 hours. In the first hour, the conche was left open to remove residual light volatile acids, before the conche was closed for the remaining 1 hour. At the end of the 2 hours, 20 minutes before stopping the conching, the lid was removed again and 4 g soy lecithin was added. The chocolate substitute was removed from the conche, tempered, and used like conventional chocolate, by molding the chocolate substitute into bars. The color and flavor of the bars were similar to dark chocolate.

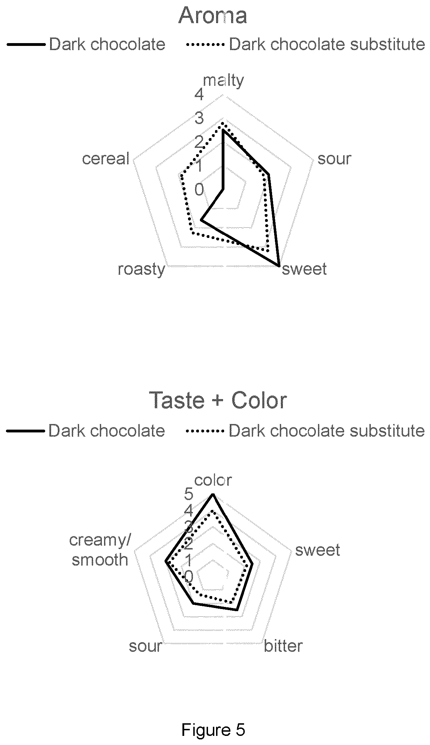

The obtained dark chocolate substitute and genuine dark chocolate with 60% cocoa content were presented to a panel (n=8) for sensory profile analysis of aroma, color, and taste (Figure 5). The malty and sour aroma had no significant difference, while the sweet aroma was tolerably lower and the roasty aroma higher in the dark chocolate substitute. Also, there was a slight cereal aroma noticeable in the chocolate substitute. The bitter, sour and sweet taste, as well as color and creaminess, were just slightly lower in the chocolate substitute compared to the 60% cocoa chocolate.

### Reference Example 10: Preparation of chocolate substitute

Formulation: 500 g flavoring agent obtained Example 3, 2300 g sugar (sucrose), 1400 g cocoa butter equivalent (commercially available, based on shea butter), 800 g skimmed milk powder, and 160 g butter fat Milling: The mass was milled (3-roll roller grinder) to produce fine particles (D90, laser diffraction) of <30 µm.

Conching: The finely milled mass was then transferred into a conching device (Elkolino Conche, Buhler, Switzerland). The conche was set to 60°C for 5 hours. In the first hour, the conche was left open to remove residual light volatile acids, before the conche was closed for the remaining 4 hours. At the end of the 5 hours, 10 minutes before stopping the conching, the lid was removed again and 1.5g vanillin and 5g soy lecithin were added. The chocolate substitute was removed from the conche, tempered, and used like conventional chocolate, by molding the chocolate substitute into bars. The chocolate had a brownish color, similar to conventional dairy chocolate, and an intense chocolate-like, dairy, and creamy aroma. After cooling down and hardening, the bars had a shiny, firm surface, comparable to conventional dairy chocolate.

### Reference Example 11: Preparation of chocolate substitute

Formulation: 500 g roasted oats 2300 g sugar (sucrose), 1400 g cocoa butter equivalent (commercially available, derived from AAK based on palm fat, and shea butter), 800 g skimmed milk powder, and 160 g butter fat were mixed to produce the chocolate substitute mass.

Milling: The mass was milled (3-roll roller grinder) to produce fine particles (D90, laser diffraction) of <30 µm.

Conching: The finely milled mass was then transferred into a conching device (Elkolino Conche, Buhler, Switzerland). 25 mL of an aqueous solution (pH = 9.0) containing 5 g glucose, 1 g leucine, 0.6 g phenylalanine, 0.5 g glycine, and 0.3 g proline was added to the conching device. The conche was set to 70°C for 5 hours. In the first 3 hours, the conche was left open to remove residual light volatile acids, before the conche was closed for the remaining 2 hours. At the end of the 5 hours, 10 minutes before stopping the conching, the lid was removed and 1 g vanillin and 1 g soy lecithin were added. The chocolate substitute was removed from the conche, tempered, and used like conventional chocolate, by molding the chocolate substitute into bars. The chocolate had a brownish color, similar to conventional dairy chocolate, and an intense chocolate-like, slightly popcorn-like, malty, and dairy aroma. After cooling down and hardening, the bars had a shiny, firm surface, comparable to conventional dairy chocolate.

### Reference Example 12: Preparation of chocolate substitute

Formulation: 300 g flavor composition obtained in Example 3 and 300 g of flavor composition obtained in Example 4, 2100 g lactose, 1700 g cocoa butter equivalent (commercially available, derived from AAK based on palm fat, and shea butter), 800 g skimmed milk powder, and 160 g butter fat were mixed to produce the chocolate substitute mass.

Milling: The mass was milled using a melangeur (stone grinder) for 48 hours and a particle size distribution (D90) of <20 µm, as determined by light scattering analysis, was obtained.

Milling and conching: The milled mass was then transferred into a melangeur (a melangeur is a rotating stone grinder, heat is produced by the friction of the stone grinders with the material and the bottom stone plate). The mass was conched using this melangeur. Due to the friction of the stones, the temperature in the mass was increased to 55°C and kept at that temperature for 40 hours. After a total of 48 hours, 5 g vanillin and 5 g soy lecithin were added and after an additional 10 minutes of mixing, the melangeur was stopped. The finalized chocolate substitute mass was analyzed by means of the particle size distribution (D90, laser diffraction), and a particle size of <20 µm, was determined. The chocolate substitute mass was molded into confectionery products (e.g., by using praline and chocolate bar molds and filled with different fillings, such as marzipan, caramel, and nuts (e.g., peanuts)). The flavor of these chocolate substitute bars was mildly bitter, with a tart, mild acidity, and showed a strong chocolate-like, nutty and creamy aroma. The overall flavor was comparable to commercially available confectionery bars.

## Claims

1. A cocoa or chocolate flavor composition comprising
at least one plant material selected from the group consisting of apricot kernels, plum kernels, peach kernels, cherry kernels, almond, jackfruit seeds, grape seeds, carob, beans, cereals, pseudo-cereals, non-cereal grains, potato, pomace, cassava root, yeast, and combinations thereof, wherein the at least one plant material comprises grape seeds,
wherein the plant material has been heat-treated in the presence of at least one amino acid and/or amino acid derivative, and at least one saccharide,
wherein the amino acid is selected from the group consisting of phenylalanine, glycine, isoleucine, lysine, leucine, proline, serine, threonine, valine, tyrosine, ornithine, and combinations thereof; and/or wherein the at least one amino acid derivative is selected from the group consisting of acetylated phenylalanine, acetylated glycine, acetylated isoleucine, acetylated lysine, acetylated leucine, acetylated proline, acetylated serine, acetylated threonine, acetylated valine, acetylated tyrosine, acetylated ornithine, and combinations thereof,
wherein the at least one saccharide is selected from monosaccharides, disaccharides, and combinations thereof, wherein the monosaccharide is preferably selected from the group consisting of glucose, fructose, xylose, rhamnose, and combinations thereof, and/or the disaccharide is preferably selected from the group consisting of sucrose, maltose, lactose, isomaltulose, isomalt, and combinations thereof, preferably selected from the group consisting of sucrose, maltose, lactose, and combinations thereof,
wherein the flavor composition is at least 95% free of cocoa or cocoa-derived solids.

2. The flavor composition according to claim 1, wherein
(i) the at least one amino acid is selected from the group consisting of phenylalanine, glycine, isoleucine, lysine, leucine, proline, serine, threonine, valine, and combinations thereof; and/or
(ii) the at least one saccharide is selected from the group consisting of glucose, fructose, xylose, rhamnose, and combinations thereof.

3. The flavor composition according to claim 1 or 2, wherein the plant material comprises press cake.

4. The flavor composition according to any one of claims 1 to 3, wherein the flavor composition comprises
(i) heat-treated grape seeds, wherein the grape seeds have been heat-treated in the presence of glucose, glycine, leucine, phenylalanine, and proline;
(ii) heat-treated grape seeds, heat-treated apricot kernels, heat-treated barley malt, and heat-treated oats, wherein the grape seeds, apricot kernels, barley malt and oats have been heat-treated in the presence of glucose, glycine, leucine, isoleucine and phenylalanine; or
(iii) heat-treated oats, heat-treated grape seeds, and heat-treated apricot kernels, wherein the oats, grape seeds, and apricot kernels have been heat-treated in the presence of glucose, glycine, leucine, isoleucine, proline, and phenylalanine.

5. A method for preparing a cocoa or chocolate flavor composition, the method comprising
(a) providing a mixture of
(i) at least one plant material, and
(ii) at least one amino acid and/or amino acid derivative, and at least one saccharide,
in an aqueous medium,
wherein the at least one plant material is selected from the group consisting of apricot kernels, plum kernels, peach kernels, cherry kernels, almond, jackfruit seeds, grape seeds, carob, beans, cereals, pseudo-cereals, non-cereal grains, potato, pomace, cassava root, yeast, and combinations thereof, wherein the at least one plant material comprises grape seeds,
wherein the at least one amino acid is selected from the group consisting of alanine, phenylalanine, glycine, isoleucine, lysine, leucine, proline, serine, threonine, valine, tyrosine, ornithine, and combinations thereof, and/or wherein the at least one amino acid derivative is selected from the group consisting of acetylated alanine, acetylated phenylalanine, acetylated glycine, acetylated isoleucine, acetylated lysine, acetylated leucine, acetylated proline, acetylated serine, acetylated threonine, acetylated valine, acetylated tyrosine, acetylated ornithine, and combinations thereof,
wherein the at least one saccharide is selected from monosaccharides, disaccharides, and combinations thereof, wherein the monosaccharide is preferably selected from the group consisting of glucose, fructose, xylose, rhamnose, and combinations thereof, and/or the disaccharide is preferably selected from the group consisting of sucrose, maltose, lactose, isomaltulose, isomalt, and combinations thereof, preferably selected from the group consisting of sucrose, maltose, lactose, and combinations thereof;
(b) heating the aqueous mixture of step (a);
(c) drying the heated mixture of step (b);
(d) optionally rinsing the dried mixture obtained in step (c);
(e) subjecting the dried mixture to a heat treatment;
(f) optionally grinding and/or defatting the heat-treated dried mixture of step (e); and
(g) obtaining the flavor composition,
wherein the flavor composition is at least 95% free of cocoa or cocoa-derived solids.

6. The method according to claim 5, wherein
(i) the at least one amino acid is selected from the group consisting of phenylalanine, glycine, isoleucine, lysine, leucine, proline, serine, threonine, valine, and combinations thereof; and/or
(ii) the at least one saccharide is selected from the group consisting of glucose, fructose, xylose, rhamnose, and combinations thereof.

7. The method according to claim 5 or 6, wherein the plant material comprises press cake.

8. The method according to any one of claim 5 to 7, wherein heating in step (b) comprising heating the aqueous mixture to a temperature of from 60°C to 100°C, preferably a temperature of from 80°C to 95°C, for at least 5 min, preferably for at least 10 min such as from 10 min to 180 min.

9. The method according to any one of claims 5 to 8, wherein the heat treatment in step (e) comprises roasting the dried mixture at a temperature of from 120°C to 220°C, preferably at a temperature of from 130°C to 210°C, for at least 2 min, preferably for at least 4 min such as from 4 min to 60 min.

10. The method according to any one of claims 5 to 9, wherein the plant material comprises grape seeds, the at least one amino acid is glycine, leucine, phenylalanine, and proline, and the at least one saccharide is glucose.

11. The method according to any one of claims 5 to 9, wherein
(i) the at least one plant material is grape seeds, apricot kernels, barley malt, and oats, the at least one amino acid is glycine, leucine, and phenylalanine, and the at least one saccharide is glucose;
(ii) the at least one plant material is oats, grape seeds, and barley malt, the at least one amino acid is glycine, leucine, and phenylalanine, and the at least one saccharide is glucose;
(iii) the at least one plant material is oats, grape seeds, and barley malt, the at least one amino acid is glycine, leucine, isoleucine, and phenylalanine, and the at least one saccharide is glucose;
(iv) the at least one plant material is grape seeds, apricot kernels, barley malt, and oats, the at least one amino acid is glycine, leucine, isoleucine, and phenylalanine, and the at least one saccharide is glucose;
(v) the at least one plant material is carob, apricot kernels, grape seeds, barley malt, and oats, the at least one amino acid is glycine, leucine, isoleucine, lysine and phenylalanine, and the at least one saccharide is glucose; or
(vi) the at least one plant material is oats, grape seeds, and barley malt, the at least one amino acid is glycine, leucine, isoleucine, proline and phenylalanine, and the at least one saccharide is glucose.

12. A flavor composition obtained by the method according to any one of claims 5 to 11.

13. A food product containing the flavor composition according to any one of claims 1 to 4 and 12, preferably wherein the food product is selected from the group consisting of confectionery products, sweet baked products, ice creams, dairy- and non-dairy products, beverages, and snack products.

14. A use of the flavor composition according to any one of claims 1 to 4 and 12 as a cocoa substitute.

15. A conched confectionery product comprising
an emulsion of a flavor composition according to any one of claims 1 to 4 and 12 and an edible fat,
wherein the conched confectionery product is at least 95% free of cocoa or cocoa-derived solids.

16. The conched confectionery product according to claim 15, wherein the conched confectionery product comprises of from 0.5 wt.-% to 20 wt.-% flavor composition based on the total weight of the conched confectionery product, preferably of from 2 wt.-% to 20 wt.-% flavor composition based on the total weight of the conched confectionery product.

## Patentansprüche

1. Kakao- oder Schokoladen-Geschmackszusammensetzung, umfassend mindestens ein Pflanzenmaterial, ausgewählt aus der Gruppe bestehend aus Aprikosenkernen, Pflaumenkernen, Pfirsichkernen, Kirschkernen, Mandeln, Jackfruchtsamen, Traubenkernen, Johannisbrot, Bohnen, Getreide, Pseudogetreide, Nicht-Getreidekörner, Kartoffeln, Trester, Maniok, Hefe und Kombinationen davon, wobei das mindestens eine Pflanzenmaterial Traubenkerne umfasst,
wobei das Pflanzenmaterial in Gegenwart mindestens einer Aminosäure und/oder eines Aminosäurederivats und mindestens eines Saccharids wärmebehandelt wurde,
wobei die Aminosäure ausgewählt ist aus der Gruppe bestehend aus Phenylalanin, Glycin, Isoleucin, Lysin, Leucin, Prolin, Serin, Threonin, Valin, Tyrosin, Ornithin und Kombinationen davon; und/oder wobei das mindestens eine Aminosäurederivat aus der Gruppe ausgewählt ist aus der Gruppe bestehend aus acetyliertem Phenylalanin, acetyliertem Glycin, acetyliertem Isoleucin, acetyliertem Lysin, acetyliertem Leucin, acetyliertem Prolin, acetyliertem Serin, acetyliertem Threonin, acetyliertem Valin, acetyliertem Tyrosin, acetyliertem Ornithin und Kombinationen davon,
wobei das mindestens eine Saccharid ausgewählt ist aus Monosacchariden, Disacchariden und Kombinationen davon, wobei das Monosaccharid vorzugsweise ausgewählt ist aus der Gruppe bestehend aus Glucose, Fructose, Xylose, Rhamnose und Kombinationen davon, und/oder das Disaccharid vorzugsweise ausgewählt ist aus der Gruppe bestehend aus Saccharose, Maltose, Lactose, Isomaltulose, Isomalt und Kombinationen davon, vorzugsweise ausgewählt aus der Gruppe bestehend aus Saccharose, Maltose, Lactose und Kombinationen davon,
wobei die Geschmackszusammensetzung zu mindestens 95 % frei von Kakao oder aus Kakao abgeleiteten Feststoffen ist.

2. Geschmackszusammensetzung nach Anspruch 1, wobei
(i) die mindestens eine Aminosäure ausgewählt ist aus der Gruppe bestehend aus Phenylalanin, Glycin, Isoleucin, Lysin, Leucin, Prolin, Serin, Threonin, Valin und Kombinationen davon; und/oder
(ii) das mindestens eine Saccharid ausgewählt ist aus der Gruppe bestehend aus Glucose, Fructose, Xylose, Rhamnose und Kombinationen davon.

3. Geschmackszusammensetzung nach Anspruch 1 oder 2, wobei das Pflanzenmaterial Presskuchen umfasst.

4. Geschmackszusammensetzung nach einem der Ansprüche 1 bis 3, wobei die Geschmackszusammensetzung umfasst:
(i) wärmebehandelte Traubenkerne, wobei die Traubenkerne in Gegenwart von Glucose, Glycin, Leucin, Phenylalanin und Prolin wärmebehandelt wurden;
(ii) wärmebehandelte Traubenkerne, wärmebehandelte Aprikosenkerne, wärmebehandeltes Gerstenmalz und wärmebehandelten Hafer, wobei die Traubenkerne, Aprikosenkerne, das Gerstenmalz und der Hafer in Gegenwart von Glucose, Glycin, Leucin, Isoleucin und Phenylalanin wärmebehandelt wurden; oder
(iii) wärmebehandelte Haferflocken, wärmebehandelte Traubenkerne und wärmebehandelte Aprikosenkerne, wobei die Haferflocken, Traubenkerne und Aprikosenkerne in Gegenwart von Glukose, Glycin, Leucin, Isoleucin, Prolin und Phenylalanin wärmebehandelt wurden.

5. Verfahren zur Herstellung einer Kakao- oder Schokoladen-Geschmackszusammensetzung, wobei das Verfahren umfasst
(a) Bereitstellen einer Mischung aus
(i) mindestens einem Pflanzenmaterial und
(ii) mindestens einer Aminosäure und/oder einem Aminosäurederivat sowie mindestens einem Saccharid,
in einem wässrigen Medium,
wobei das mindestens eine Pflanzenmaterial ausgewählt ist aus der Gruppe bestehend aus Aprikosenkernen, Pflaumenkernen, Pfirsichkernen, Kirschkernen, Mandeln, Jackfruchtsamen, Traubenkernen, Johannisbrot, Bohnen, Getreide, Pseudogetreide, Nicht-Getreidekörner, Kartoffeln, Trester, Maniok, Hefe und Kombinationen davon, wobei das mindestens eine Pflanzenmaterial Traubenkerne umfasst,
wobei die mindestens eine Aminosäure ausgewählt ist aus der Gruppe bestehend aus Alanin, Phenylalanin, Glycin, Isoleucin, Lysin, Leucin, Prolin, Serin, Threonin, Valin, Tyrosin, Ornithin und Kombinationen davon, und/oder wobei das mindestens eine Aminosäurederivat ausgewählt ist aus der Gruppe bestehend aus acetyliertem Alanin, acetyliertem Phenylalanin, acetyliertem Glycin, acetyliertem Isoleucin, acetyliertem Lysin, acetyliertem Leucin, acetyliertem Prolin, acetyliertem Serin, acetyliertem Threonin, acetyliertem Valin, acetyliertem Tyrosin, acetyliertem Ornithin und Kombinationen davon, wobei das mindestens eine Saccharid ausgewählt ist aus Monosacchariden, Disacchariden und Kombinationen davon, wobei das Monosaccharid vorzugsweise ausgewählt ist aus der Gruppe bestehend aus Glucose, Fructose, Xylose, Rhamnose und Kombinationen davon, und/oder das Disaccharid vorzugsweise ausgewählt ist aus der Gruppe bestehend aus Saccharose, Maltose, Lactose, Isomaltulose, Isomalt und Kombinationen davon, vorzugsweise ausgewählt aus der Gruppe bestehend aus Saccharose, Maltose, Lactose und Kombinationen davon;
(b) Erhitzen der wässrigen Mischung aus Schritt (a);
(c) Trocknen der erhitzten Mischung aus Schritt (b);
(d) gegebenenfalls Spülen der in Schritt (c) erhaltenen getrockneten Mischung;
(e) Unterziehen der getrockneten Mischung einer Wärmebehandlung;
(f) gegebenenfalls Mahlen und/oder Entfetten der wärmebehandelten getrockneten Mischung aus Schritt (e); und
(g) Erhalten der Geschmackszusammensetzung,
wobei die Geschmackszusammensetzung zu mindestens 95 % frei von Kakao oder aus Kakao abgeleiteten Feststoffen ist.

6. Verfahren nach Anspruch 5, wobei
(i) die mindestens eine Aminosäure ausgewählt ist aus der Gruppe bestehend aus Phenylalanin, Glycin, Isoleucin, Lysin, Leucin, Prolin, Serin, Threonin, Valin und Kombinationen davon; und/oder
(ii) das mindestens eine Saccharid ausgewählt ist aus der Gruppe bestehend aus Glucose, Fructose, Xylose, Rhamnose und Kombinationen davon.

7. Verfahren nach Anspruch 5 oder 6, wobei das Pflanzenmaterial Presskuchen umfasst.

8. Verfahren nach einem der Ansprüche 5 bis 7, wobei das Erhitzen in Schritt (b) das Erhitzen der wässrigen Mischung auf eine Temperatur von 60 °C bis 100 °C, vorzugsweise auf eine Temperatur von 80 °C bis 95 °C, für mindestens 5 Minuten, vorzugsweise für mindestens 10 Minuten, beispielsweise von 10 Minuten bis 180 Minuten, umfasst.

9. Verfahren nach einem der Ansprüche 5 bis 8, wobei die Wärmebehandlung in Schritt (e) das Rösten der getrockneten Mischung bei einer Temperatur von 120 °C bis 220 °C, vorzugsweise bei einer Temperatur von 130 °C bis 210 °C, für mindestens 2 Minuten, vorzugsweise für mindestens 4 Minuten, beispielsweise von 4 Minuten bis 60 Minuten, umfasst.

10. Verfahren nach einem der Ansprüche 5 bis 9, wobei das Pflanzenmaterial Traubenkerne umfasst, die mindestens eine Aminosäure Glycin, Leucin, Phenylalanin und Prolin ist und das mindestens eine Saccharid Glucose ist.

11. Verfahren nach einem der Ansprüche 5 bis 9, wobei
(i) das mindestens eine Pflanzenmaterial Traubenkerne, Aprikosenkerne, Gerstenmalz und Hafer ist, die mindestens eine Aminosäure Glycin, Leucin und Phenylalanin ist und das mindestens eine Saccharid Glucose ist;
(ii) das mindestens eine Pflanzenmaterial Hafer, Traubenkerne und Gerstenmalz ist, die mindestens eine Aminosäure Glycin, Leucin und Phenylalanin ist und das mindestens eine Saccharid Glucose ist;
(iii) das mindestens eine Pflanzenmaterial Hafer, Traubenkerne und Gerstenmalz ist, die mindestens eine Aminosäure Glycin, Leucin, Isoleucin und Phenylalanin ist und das mindestens eine Saccharid Glucose ist;
(iv) das mindestens eine Pflanzenmaterial Traubenkerne, Aprikosenkerne, Gerstenmalz und Hafer ist, die mindestens eine Aminosäure Glycin, Leucin, Isoleucin und Phenylalanin ist und das mindestens eine Saccharid Glucose ist;
(v) das mindestens eine Pflanzenmaterial Johannisbrot, Aprikosenkerne, Traubenkerne, Gerstenmalz und Hafer ist, die mindestens eine Aminosäure Glycin, Leucin, Isoleucin, Lysin und Phenylalanin ist und das mindestens eine Saccharid Glucose ist; oder
(vi) das mindestens eine Pflanzenmaterial Hafer, Traubenkerne und Gerstenmalz ist, die mindestens eine Aminosäure Glycin, Leucin, Isoleucin, Prolin und Phenylalanin ist und das mindestens eine Saccharid Glucose ist.

12. Geschmackszusammensetzung, erhalten durch das Verfahren nach einem der Ansprüche 5 bis 11.

13. Lebensmittelprodukt, das die Geschmackszusammensetzung nach einem der Ansprüche 1 bis 4 und 12 enthält, wobei das Lebensmittelprodukt vorzugsweise ausgewählt ist aus der Gruppe bestehend aus Süßwarenprodukten, süßen Backwaren, Speiseeis, Milch- und milchfreien Produkten, Getränken und Snackprodukten.

14. Verwendung der Geschmackszusammensetzung nach einem der Ansprüche 1 bis 4 und 12 als Kakaoersatz.

15. Conchiertes Süßwarenprodukt, umfassend
eine Emulsion aus einer Geschmackszusammensetzung nach einem der Ansprüche 1 bis 4 und 12 und einem essbaren Fett,
wobei das conchierte Süßwarenprodukt zu mindestens 95 % frei von Kakao oder aus Kakao abgeleiteten Feststoffen ist.

16. Conchiertes Süßwarenprodukt nach Anspruch 15, wobei das conchierte Süßwarenprodukt 0,5 Gew.-% bis 20 Gew.-% Geschmackszusammensetzung, bezogen auf das Gesamtgewicht des conchierten Süßwarenprodukts, vorzugsweise 2 Gew.-% bis 20 Gew.-% Geschmackszusammensetzung, bezogen auf das Gesamtgewicht des conchierten Süßwarenprodukts, umfasst.

## Revendications

1. Composition aromatique au cacao ou au chocolat comprenant
au moins une matière végétale choisie parmi le groupe constitué des noyaux d'abricot, des noyaux de prune, des noyaux de pêche, des noyaux de cerise, des amandes, des graines de jacquier, des pépins de raisin, de la caroube, haricots, céréales, pseudo-céréales, grains non céréaliers, pommes de terre, marc, racines de manioc, levure et leurs combinaisons, dans laquelle ladite au moins une matière végétale comprend des pépins de raisin,
dans laquelle la matière végétale a été traitée thermiquement en présence d'au moins un acide aminé et/ou un dérivé d'acide aminé, et d'au moins un saccharide,
dans laquelle l'acide aminé est choisi parmi le groupe constitué de la phénylalanine, glycine, l'isoleucine, la lysine, la leucine, la proline, la sérine, la thréonine, la valine, la tyrosine, l'ornithine et leurs combinaisons ; et/ou dans lequel ledit au moins un dérivé d'acide aminé est choisi parmi le groupe constitué de la phénylalanine acétylée, de la glycine acétylée, de l'isoleucine acétylée, de la lysine acétylée, de la leucine acétylée, de la la proline acétylée, la sérine acétylée, la thréonine acétylée, la valine acétylée, la tyrosine acétylée, l'ornithine acétylée et leurs combinaisons,
dans lequel le ou les saccharides sont choisis parmi les monosaccharides, les disaccharides et leurs combinaisons, le monosaccharide étant de préférence choisi parmi le groupe comprenant le glucose, le fructose, le xylose, rhamnose et leurs combinaisons, et/ou le disaccharide est de préférence choisi parmi le groupe constitué du saccharose, du maltose, du lactose, de l'isomaltulose, de l'isomalt et de leurs combinaisons, de préférence choisi parmi le groupe constitué du saccharose, du maltose, du lactose et de leurs combinaisons,
dans laquelle la composition aromatique est exempte à au moins 95 % de cacao ou de solides dérivés du cacao.

2. Composition aromatique selon la revendication 1, dans laquelle
(i) le au moins un acide aminé est choisi parmi le groupe constitué de la phénylalanine, de la glycine, de l'isoleucine, de la lysine, de la leucine, de la proline, de la sérine, de la thréonine, de la valine et de leurs combinaisons ; et/ou
(ii) le au moins un saccharide est choisi parmi le groupe constitué du glucose, du fructose, du xylose, du rhamnose et de leurs combinaisons.

3. Composition aromatique selon la revendication 1 ou 2, dans laquelle la matière végétale comprend du tourteau.

4. Composition aromatique selon l'une quelconque des revendications 1 à 3, dans laquelle la composition aromatique comprend
(i) des pépins de raisin traités thermiquement, lesdits pépins de raisin ayant été traités thermiquement en présence de glucose, de glycine, de leucine, de phénylalanine et de proline ;
(ii) des pépins de raisin traités thermiquement, des noyaux d'abricot traités thermiquement, du malt d'orge traité thermiquement et de l'avoine traitée thermiquement, les pépins de raisin, les noyaux d'abricot, le malt d'orge et l'avoine ayant été traités thermiquement en présence de glucose, de glycine, de leucine, d'isoleucine et de phénylalanine ; ou
(iii) de l'avoine traitée thermiquement, des pépins de raisin traités thermiquement et des noyaux d'abricot traités thermiquement, dans lesquels l'avoine, les pépins de raisin et les noyaux d'abricot ont été traités thermiquement en présence de glucose, de glycine, de leucine, d'isoleucine, de proline et de phénylalanine.

5. Procédé de préparation d'une composition aromatisante au cacao ou au chocolat, le procédé comprenant
(a) la mise à disposition d'un mélange de
(i) au moins une matière végétale, et
(ii) au moins un acide aminé et/ou un dérivé d'acide aminé, et au moins un saccharide,
dans un milieu aqueux,
dans lequel ladite au moins une matière végétale est choisie parmi le groupe constitué des noyaux d'abricot, des noyaux de prune, des noyaux de pêche, des noyaux de cerise, des amandes, des graines de jacquier, des pépins de raisin, de la caroube, haricots, céréales, pseudo-céréales, grains non céréaliers, pommes de terre, marc, racines de manioc, levure, et leurs combinaisons, dans lequel la au moins une matière végétale comprend des pépins de raisin,
dans lequel le au moins un acide aminé est choisi parmi le groupe constitué de l'alanine, de la phénylalanine, de la glycine, l'isoleucine, la lysine, la leucine, la proline, la sérine, la thréonine, la valine, la tyrosine, l'ornithine et leurs combinaisons, et/ou dans lequel ledit au moins un dérivé d'acide aminé est choisi parmi le groupe constitué de l'alanine acétylée, de la phénylalanine acétylée, de la glycine acétylée, de l'isoleucine acétylée, de la lysine acétylée, de la leucine acétylée, proline acétylée, sérine acétylée, thréonine acétylée, valine acétylée, tyrosine acétylée, ornithine acétylée et leurs combinaisons,
dans lequel le au moins un saccharide est choisi parmi les monosaccharides, les disaccharides et leurs combinaisons, le monosaccharide étant de préférence choisi parmi le groupe constitué du glucose, du fructose, du xylose, rhamnose et leurs combinaisons, et/ou le disaccharide est de préférence choisi parmi le groupe constitué du saccharose, du maltose, du lactose, de l'isomaltulose, de l'isomalt et de leurs combinaisons, de préférence choisi parmi le groupe constitué du saccharose, du maltose, du lactose et de leurs combinaisons ;
(b) chauffer le mélange aqueux de l'étape (a) ;
(c) sécher le mélange chauffé de l'étape (b) ;
(d) rincer éventuellement le mélange séché obtenu à l'étape (c) ;
(e) soumettre le mélange séché à un traitement thermique ;
(f) broyage et/ou dégraissage éventuels du mélange séché et traité thermiquement de l'étape (e) ; et
(g) obtention de la composition aromatique,
dans laquelle la composition aromatique est exempte à au moins 95 % de cacao ou de solides dérivés du cacao.

6. Procédé selon la revendication 5, dans lequel
(i) le au moins un acide aminé est choisi dans le groupe constitué par la phénylalanine, la glycine, l'isoleucine, la lysine, la leucine, la proline, la sérine, la thréonine, la valine et leurs combinaisons ; et/ou
(ii) le au moins un saccharide est choisi parmi le groupe constitué du glucose, du fructose, du xylose, du rhamnose et de leurs combinaisons.

7. Procédé selon la revendication 5 ou 6, dans lequel la matière végétale comprend du tourteau.

8. Procédé selon l'une quelconque des revendications 5 à 7, dans lequel le chauffage à l'étape (b) comprend le chauffage du mélange aqueux à une température comprise entre 60 °C et 100 °C, de préférence entre 80 °C et 95 °C, pendant au moins 5 minutes, de préférence pendant au moins 10 minutes, par exemple entre 10 minutes et 180 minutes.

9. Procédé selon l'une quelconque des revendications 5 à 8, dans lequel le traitement thermique de l'étape (e) comprend la torréfaction du mélange séché à une température comprise entre 120 °C et 220 °C, de préférence à une température comprise entre 130 °C et 210 °C, pendant au moins 2 minutes, de préférence pendant au moins 4 minutes, par exemple de 4 minutes à 60 minutes.

10. Procédé selon l'une quelconque des revendications 5 à 9, dans lequel la matière végétale comprend des pépins de raisin, le au moins un acide aminé est la glycine, la leucine, la phénylalanine et la proline, et le au moins un saccharide est le glucose.

11. Procédé selon l'une quelconque des revendications 5 à 9, dans lequel
(i) la au moins une matière végétale est les pépins de raisin, les noyaux d'abricot, le malt d'orge et l'avoine, le au moins un acide aminé est la glycine, la leucine et la phénylalanine, et le au moins un saccharide est le glucose ;
(ii) la au moins une matière végétale est l'avoine, les pépins de raisin et le malt d'orge, le au moins un acide aminé est la glycine, la leucine et la phénylalanine, et le au moins un saccharide est le glucose ;
(iii) la au moins une matière végétale est l'avoine, les pépins de raisin et le malt d'orge, le au moins un acide aminé est la glycine, la leucine, l'isoleucine et la phénylalanine, et le au moins un saccharide est le glucose ;
(iv) la au moins une matière végétale est les pépins de raisin, les noyaux d'abricot, le malt d'orge et l'avoine, le au moins un acide aminé est la glycine, la leucine, l'isoleucine et la phénylalanine, et le au moins un saccharide est le glucose ;
(v) la au moins une matière végétale est le caroube, les noyaux d'abricot, les pépins de raisin, le malt d'orge et l'avoine, la au moins une acide aminé est la glycine, la leucine, l'isoleucine, la lysine et la phénylalanine, et le au moins un saccharide est le glucose ; ou
(vi) la au moins une matière végétale est l'avoine, les pépins de raisin et le malt d'orge, le au moins un acide aminé est la glycine, la leucine, l'isoleucine, la proline et la phénylalanine, et le au moins un saccharide est le glucose.

12. Composition aromatique obtenue par le procédé selon l'une quelconque des revendications 5 à 11.

13. Produit alimentaire contenant la composition aromatique selon l'une quelconque des revendications 1 à 4 et 12, de préférence dans lequel le produit alimentaire est choisi parmi le groupe constitué de produits de confiserie, de produits de boulangerie sucrés, de crèmes glacées, de produits laitiers et non laitiers, de boissons et de produits de snacking.

14. Utilisation de la composition aromatique selon l'une quelconque des revendications 1 à 4 et 12 en tant que substitut du cacao.

15. Produit de confiserie conché comprenant
une émulsion d'une composition aromatique selon l'une quelconque des revendications 1 à 4 et 12 et d'une matière grasse comestible,
dans lequel le produit de confiserie conché est exempt à au moins 95 % de cacao ou de solides dérivés du cacao.

16. Produit de confiserie conché selon la revendication 15, dans lequel le produit de confiserie conché comprend de 0,5 % en poids à 20 % en poids de composition aromatique par rapport au poids total du produit de confiserie conché, de préférence de 2 % en poids à 20 % en poids de composition aromatique par rapport au poids total du produit de confiserie conché.
